# EUROPÄISCHE PATENTSCHRIFT

(11) **EP 2 421 417 B1**
(45) Veröffentlichungstag und Bekanntmachung des Hinweises auf die Patenterteilung: **20.11.2013**
(21) Anmeldenummer: 10704751.6
(22) Anmeldetag: 09.02.2010
(51) Int. Cl.: A47J 31/36

(54) **VORRICHTUNG ZUR ERZEUGUNG VON KAFFEE ODER ANDEREN GETRÄNKEN**
APPARATUS FOR PRODUCING COFFEE OR OTHER BEVERAGES
DISPOSITIF DE PRÉPARATION DE CAFÉ OU D'AUTRES BOISSONS

(30) Priorität: 23.04.2009 CH 6452009
(43) Veröffentlichungstag der Anmeldung: 29.02.2012
(73) Patentinhaber: In-Albon, Jean-Paul, 1957 Ardon (CH); Bircher, Hans-Robert, 3110 Münsingen (CH)
(72) Erfinder: In-Albon, Jean-Paul, 1957 Ardon (CH); Bircher, Hans-Robert, 3110 Münsingen (CH)
(86) Internationale Anmeldenummer: PCT/EP2010/000772
(87) Internationale Veröffentlichungsnummer: WO 2010/121680

(56) Entgegenhaltungen:
- EP-A1- 0 468 915
- EP-A1- 2 036 467
- EP-A2- 0 299 399

## Beschreibung

Die Erfindung betrifft eine Vorrichtung zur Erzeugung von Kaffee oder anderen Getränken gemäss dem Oberbegriff des Anspruches 1.

Es sind Vorrichtungen dieser Art, beispielsweise Kaffeemaschinen, bekannt, bei denen der Brühzylinder stationär angeordnet ist und sich somit sowohl während der Beladung der Brühkammer mit gemahlenem Kaffee als auch während des Brühvorganges in der gleichen Position befindet. Das Mahlwerk für den Kaffee befindet sich in unmittelbaren Nähe des Brühzylinders, so dass es nachteiligerweise durch die Wärme im Brühzylinder auch zur Erwärmung des nicht unmittelbar zur Brühung bestimmten Kaffees kommt.

In der Druckschrift EP-A-0 299 399 ist bei einer Kaffeezubereitungseinrichtung ein axial verschiebbarer Brühzylinder vorgesehen, welcher mit zwei Kolben zusammenwirkt, die in der gleichen Richtung wie der Brühzylinder beweglich sind. In der Ladeposition ist der eine Kolben so positioniert, dass Kaffeepulver durch eine Öffnung im Brühzylinder eingelassen werden kann. Indes in der Brühposition ist der Brühzylinder und der andere Kolben so axial verschoben, dass der Kaffee verdichtet ist und heisses Wasser für die Erzeugung des Kaffeegetränkes durchgelassen wird. In der Ausstossposition sind der Brühzylinder und der eine Kolben unterschiedlich weit zurückgezogen, so dass der Kaffeekuchen aus dem Brühzylinder ausgestossen wird und herunterfällt. Da sowohl der Brühzylinder als auch die beiden Kolben in einer Achse bewegt werden, ist dies mit relativ viel Platzaufwand in deren Verschieberichtung verbunden.

Der vorliegenden Erfindung liegt die Aufgabe zugrunde, eine Vorrichtung der eingangs genannten Art zu schaffen, bei der nicht nur der vorstehend erwähnte Nachteil wegfällt, sondern auch eine effizientere Erzeugung von Kaffee oder anderen Getränken möglich ist.

Diese Aufgabe wird erfindungsgemäss durch eine Vorrichtung mit den Merkmalen des Anspruches 1 gelöst.

Weitere bevorzugte Ausgestaltungen der erfindungsgemässen Vorrichtung bilden den Gegenstand der abhängigen Ansprüche.

Dadurch, dass erfindungsgemäss der Brühzylinder aus einer Beladungsposition in eine Brühposition und zurück bewegbar ist, kann das Malwerk oder mehrere Mahlwerke vom Brühzylinder ausreichend thermisch isoliert werden. Von besonderem Vorteil ist, dass bereits während des Brühvorganges in einem Brühzylinder die Brühkammer eines weiteren Brühzylinders beladen werden kann. Vorzugsweise können sogar mehr als zwei Brühzylinder vorgesehen sein, die voneinander unabhängig zwischen den beiden Positionen bewegt werden können, so dass sich parallele Brühvorgänge in diesen Brühzylindern zeitlich überlappen können. In einer besonders bevorzugten Weise sind der Station zur Beladung mehrere Mahlwerke zugeordnet, wobei das Mahlgut jedes Mahlwerkes wahlweise in jede vorhandene Brühkammer gefördert werden kann.

Es können vorzugsweise Mittel wie beispielsweise Ventile vorgesehen sein, mit denen der gebrühter Kaffee von einzelnen Brühkammern zu einem oder mehreren Auslässen wie gewünscht geleitet werden kann. Es kann auch Kaffee aus allen Brühkammern in denselben Kaffeeauslass geleitet werden, wenn beispielsweise grössere Mengen erforderlich sind.

Die Erfindung wird nachfolgend anhand der Zeichnung näher erläutert. Es zeigen:
- Fig. 1: schematisch in Draufsicht ein Ausführungsbeispiel einer erfindungsgemässen Vorrichtung zur Erzeugung von Kaffee mit zwei Brühzylindern und einer Station zur Beladung von Brühkammer des jeweiligen Brühzylinders;
- Fig. 2: einen Schnitt nach Linie II-II in Fig. 1, mit einem ersten Brühzylinder in einer Beladungsposition;
- Fig. 3: einen Schnitt nach Linie III-III in Fig. 1, mit einem zweiten Brühzylinder in einer Brühposition; und
- Fig. 4 bis 7: die Vorrichtung nach Fig. 1 bis 3 in perspektivischer Darstellung in vier Arbeitszyklusphasen.

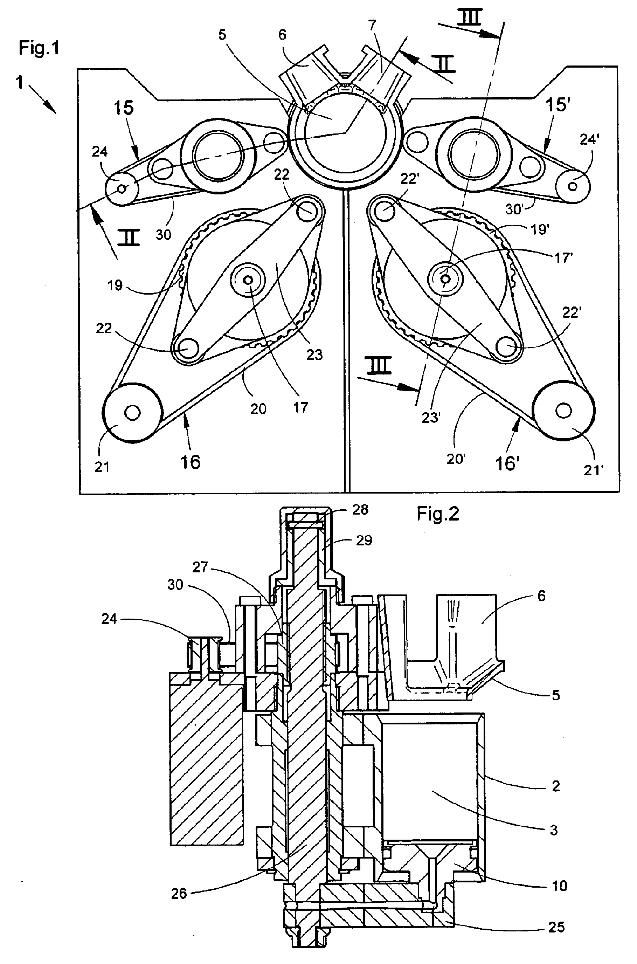

In Fig.1 bis 7 ist eine Vorrichtung 1 zur Erzeugung von Kaffee gezeigt, die zwei Brüheinheiten mit je einem aus Fig. 2 bzw. 3 und Fig. 4 bis 7 ersichtlichen, je eine Brühkammer 3, 3' umschliessenden Brühzylinder 2, 2' sowie eine Station 5 zur Beladung der jeweiligen Brühkammer 3, 3' mit gemahlenem Kaffee umfasst. Der Station 5 kann gemäss Fig. 1 über Pulverdurchgänge 6, 7 das Mahlgut von je einem Mahlwerk (in der Zeichnung nicht dargestellt) zugeführt werden. Die Mahlwerke werden vorzugsweise von einem gemeinsamen Motor angetrieben, wobei wahlweise jeweils nur ein Mahlwerk eingesetzt wird.

Die Brühkammer 3, 3' des jeweiligen Brühzylinders 2, 2' ist stirnseitig durch je einen in Achsrichtung des Brühzylinders 2, 2' verstellbaren Brühkolben 10, 10'; 11, 11' verschliessbar, die voneinander unabhängig bewegt werden können. Beim dargestellten Ausführungsbeispiel sind die Brühzylinder 2, 2' vertikal angeordnet. Für die Bewegung der unteren Brühkolben 10, 10' ist je ein Antrieb 15, 15' vorgesehen, die Bewegung der oberen Brühkolben 11, 11' wird über je ein Antrieb 16, 16' bewerkstelligt (Fig. 1).

Die oberen Brühkolben 11, 11', die beim dargestellten Ausführungsbeispiel lediglich eine vertikale Hubbewegung ausüben, sind jeweils mit einer als Gewindestange ausgebildeten Kolbenstange 17, 17' verbunden und wirken jeweils mit einer Gewindemutter 18, 18' zusammen, die beispielsweise über eine Zahnriemenscheibe 19, 19' und einen Zahnriemen 20, 20' von einem Antriebsmotor 21, 21' angetrieben wird. Dabei sind die Kolbenstangen 17, 17' sowie die oberen Brühkolben 11, 11' über je eine jeweils auf zwei ortsfesten Führungsstangen 22, 22' geführte Jochplatte 23, 23' gegen Verdrehung gesichert.

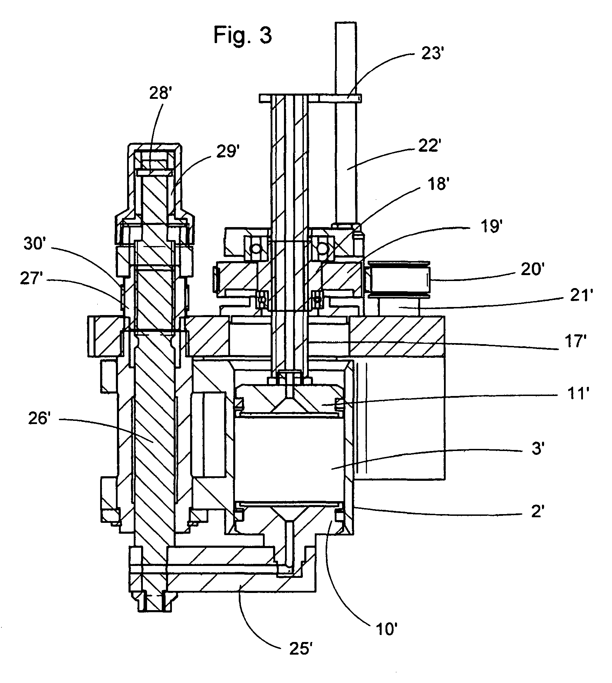

Die unteren Brühkolben 10, 10' führen eine kombinierte Hubund Schwenkbewegung aus. Sie sind jeweils auf einem Schwenkarm 25, 25' angeordnet, der mit einer Führungsachse 26, 26' verbunden ist (Fig. 2 und 3). Die Führungsachsen 26, 26' sind jeweils mit einer von einem Antriebsmotor 24, 24' über einen Antriebsriemen 30, 30' antreibbaren Gewindemutter 27, 27' wirkverbunden und über diese axial verstellbar, wodurch die Hubbewegung der unteren Brühkolben 10, 10' (samt der Schwenkarme 25, 25') bewerkstelligt wird. Dabei kann der jeweilige untere Brühkolben 10, 10' aus dem jeweiligen Brühzylinder 2, 2' nach unten hinausgeschoben werden. Über einen in der jeweiligen Führungsachse 26, 26' eingesetzten Querstift 28, 28', der mit einer Kulisse 29, 29' zusammenwirkt, wird bei der Axialbewegung der Führungsachse 26, 26' eine Schwenkbewegung des den unteren Brühkolben 10, 10' tragenden Schwenkarmes 25, 25' erzwungen.

Über den Schwenkarm 25, 25' kann einerseits der aus dem jeweiligen Brühzylinder 2, 2' hinausgeschobene untere Brühkolben 10, 10' aus der zum Brühzylinder 2, 2' koaxialen Stellung verschwenkt werden, um die Brühkammer 3, 3' zum Ausstossen des verbrauchten Kaffeepulvers freizugeben (dies geschieht dann mittels des oberen Brühkolbens 11, 11'), anderseits kann aber auch der gesamte Brühzylinder 2, 2' mit dem unteren Brühkolben 10, 10' aus einer in Fig. 2 dargestellten Beladungsposition in eine Brühposition nach Fig. 3 und umgekehrt geschwenkt werden. Selbstverständlich kann dies lediglich dann geschehen, wenn sich der obere Brühkolben 11, 11' ausserhalb des Brühzylinders 2, 2' befindet, d.h. nach oben hinausgeschoben ist. Es wäre durchaus möglich, die Schwenkbewegung von der Auf- und Abbewegung der Führungsachse zu trennen und über einen separaten Antrieb durchzuführen bzw. durch ein anderes Mittel seitlich vom Brühzylinder weg zu bewegen.

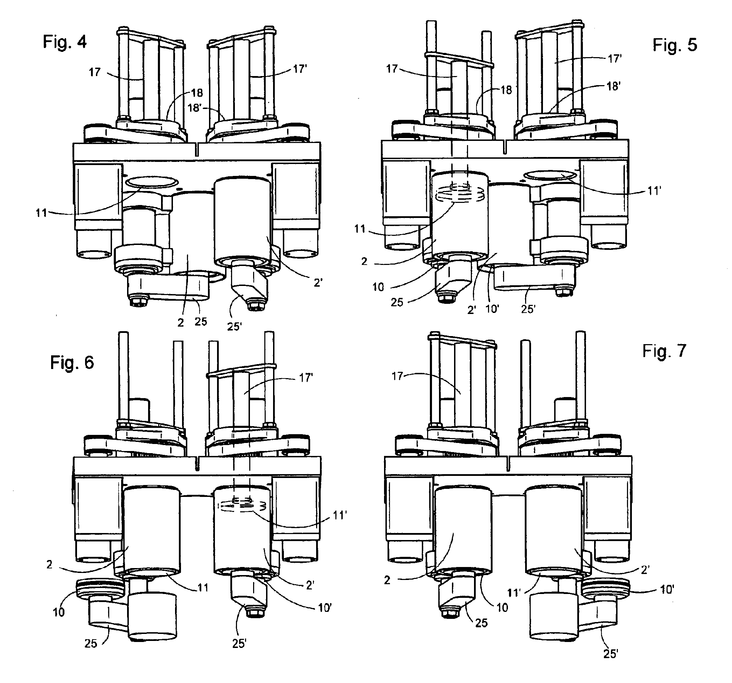

Im folgenden wird nun der mit der Vorrichtung 1 realisierbare Ablauf eines Arbeitszyklus anhand von Fig. 4 bis 7 beschrieben.

Fig. 4 stellt eine Phase dar, in der sich der erste Brühzylinder 2 in der der Fig. 2 entsprechenden Beladungsposition, unterhalb der Station 5, befindet. Der obere Brühkolben 11 befindet sich in seiner obersten Position. Der nach oben offene Brühzylinder 2 wird mit Mahlgut beladen. Der andere Brühzylinder 2' befindet sich in der Brühposition, ist jedoch noch leer. Der zweite obere Brühkolben 11' ist oberhalb des zweiten Brühzylinders 2' angeordnet.

Fig. 5 zeigt eine Phase, in der der erste Brühzylinder 2 samt dem unteren Brühkolben 10 über den mit dem Antrieb 15 wirkverbundenen Schwenkarm 25 zurück in die Brühposition geschwenkt wurde. Der obere Brühkolben 11 wurde über den Antrieb 16 in den Brühzylinder 2 eingeführt und wird nach unten bewegt, d.h. es wird der Brühvorgang durchgeführt. Inzwischen wurde der zweite Brühzylinder 2' samt dem unteren Brühkolben 10' über den mit dem Antrieb 15' wirkverbundenen Schwenkarm 25' aus der Brühposition (vom oberen Brühkolben 11' ungehindert) in die Beladungsposition geschwenkt und wird mit Mahlgut gefüllt.

In einer weiteren Phase nach Fig. 6 wurde aus dem ersten Brühzylinder 2 der untere Brühkolben 10 über den die Führungsstange 26 umfassenden Antrieb 15 hinausgeschoben und mit dem Schwenkarm 25 aus der zum Brühzylinder 2 koaxialen Stellung ausgeschwenkt. Das verbrauchte Kaffeepulver wurde aus der dadurch freigegeben Brühkammer 3 mittels des oberen Brühkolbens 11 nach unten ausgestossen. Unterdessen wird in dem in die Brühposition zurück geschwenkten zweiten Brühzylinder 2' Kaffee gebrüht.

Fig. 7 zeigt den unteren Brühkolben 10 des ersten Brühzylinders 2 zurück in die zum Brühzylinder 2 koaxialen Stellung geschwenkt und von unten in den Brühzylinder 2 eingeführt. Der obere Brühkolben 11 wurde wieder nach oben, aus dem Brühzylinder 2 heraus, verschoben. Nun steht dieser erste Brühzylinder 2 wieder zum Verschwenken in die Beladungsposition bereit, während vom zweiten Brühzylinder 2' nach Abschluss des Brühvorganges das verbrauchte Kaffeepulver ausgestossen wird.

Die erfindungsgemässe Vorrichtung 1 erlaubt, den jeweiligen Brühzylinder 2, 2' von einer Seite mit Mahlgut zu beladen und den Kaffeesatz auf der anderen Seite auszuwerfen. Das Ausstossen nach unten bringt den Vorteil mit sich, dass keine zusätzliche Vorrichtung zum Abstreifen des verbrauchten Kaffeepulvers benötigt wird.

Der Durchfluss des in die Brühkammern 3, 3' eingeführten Heisswassers einerseits und des aus den die Brühkammern 3, 3' zu einem oder zwei Auslässen geleiteten, fertig gebrühten Kaffees anderseits kann sowohl von oben nach unten, als auch von unten nach oben erfolgen.

Das erfindungsgemässe Prinzip der räumlichen Trennung der Brühung und der Beladung der Brühkammer ist vorteilhaft bezüglich der thermischen Trennung des Mahlwerkes von der Brüheinheit. Bei Verwendung von zwei Brüheinheiten kann vorteilhaft bereits während des Brühvorganges in einem Brühzylinder die Brühkammer des anderen Brühzylinders beladen werden. Vorzugsweise können sogar mehr als zwei Brühzylinder vorgesehen sein, die voneinander unabhängig zwischen den beiden Positionen bewegt werden können, so dass sich parallele Brühvorgänge in diesen Brühzylindern zeitlich überlappen können. In einer besonders bevorzugten Weise sind der Station zur Beladung mehrere Mahlwerke zugeordnet, wobei das Mahlgut jedes Mahlwerkes wahlweise in jede vorhandene Brühkammer gefördert werden kann.

Es können vorzugsweise Mittel wie beispielsweise Ventile vorgesehen sein, mit denen der gebrühter Kaffee von einzelnen Brühkammern zu einem oder mehreren Auslässen wie gewünscht geleitet werden kann. Es kann auch Kaffee aus allen Brühkammern in denselben Kaffeeauslass geleitet werden, wenn beispielsweise grössere Mengen erforderlich sind.

Anstelle mit Mahlgut kann in der Beladungsposition die jeweilige Brühkammer auch mit anderen für die Zubereitung eines Getränkes geeigneten Stoffen sowie mit Reinigungsmitteln in jeder denkbaren Form wie z.B. in Form von soliden Festkörpern, Pulver, Spliter, Granulat, Tabletten, Flüssigkeit etc. beladen werden. Es kann sich beispielsweise um Milchpulver oder flüssige Milch, Tee in Pulverform oder auch in Blättern, Kakao und Schokolade (sowohl Pulver als auch Spliter und Bruchstücke), Sirups und sonstige Aromastoffe oder alkoholische Getränke handeln.

## Patentansprüche

1. Vorrichtung zur Erzeugung von Kaffee oder anderen Getränken, mit mindestens einem Brühzylinder (2; 2') und mit in diesem verschiebbare Brühkolben (10, 11; 10', 11'), welche eine Brühkammer (3; 3') bilden, und mit einer Beladestation (5) zur Beladung der Brühkammer (3; 3') mit gemahlenem Kaffee oder anderen für die Zubereitung des jeweiligen Getränkes vorgesehenen Medien, **dadurch gekennzeichnet, dass**
der Brühzylinder (2; 2') zusammen mit dem einen Brühkolben (10; 10') aus einer Brühposition zur Beladungsstation (5) quer zur Verschieberichtung des Brühkolbens (10; 10') im Brühzylinder (2; 2') bewegbar und zurückbewegbar ist, wobei dieser eine Brühkolben (10; 10') für das Entfernen des gebrauchten Kaffees bzw. Mediums vom Brühzylinder (2; 2') wegnehmbar ist.

2. Vorrichtung nach Anspruch 1, **dadurch gekennzeichnet, dass** zwei oder mehrere Brühzylinder (2; 2') vorgesehen sind, die voneinander unabhängig zwischen den beiden Positionen bewegbar sind.

3. Vorrichtung nach Anspruch 1 oder 2, **dadurch gekennzeichnet, dass** die Brühkammer (3; 3') des Brühzylinders (2; 2') stirnseitig durch je einen in Achsrichtung des Brühzylinders (2; 2') verstellbaren Brühkolben (10, 11; 10', 11') verschliessbar ist, wobei mindestens einer der Brühkolben (10; 10') aus dem Brühzylinder (2; 2') hinausschiebbar und über einen Schwenkarm (25; 25') aus der zum Brühzylinder (2; 2') koaxialen Stellung verschwenkbar oder durch ein anderes Mittel vom Brühzylinder weg bewegbar ist, wobei die Bewegungen der beiden Brühkolben (10, 11; 10', 11') voneinander unabhängig durchführbar sind.

4. Vorrichtung nach Anspruch 3, **dadurch gekennzeichnet, dass** einer der Brühkolben (10; 10') sich während der Bewegung des Brühzylinders (2; 2') zwischen der Beladungsposition und der Brühposition im Brühzylinder (2; 2') befindet.

5. Vorrichtung nach Anspruch 4, **dadurch gekennzeichnet, dass** der im Brühzylinder (2; 2') während seiner Bewegung zwischen der Beladungsposition und der Brühposition verbleibende Brühkolben (10; 10') mit dem Schwenkarm (25; 25') verbunden ist und der Brühzylinder (2; 2') über den Schwenkarm (25; 25') aus der einen Position in die andere verschwenkbar ist.

6. Vorrichtung nach Anspruch 5, **dadurch gekennzeichnet, dass** der Brühzylinder (2; 2') vertikal angeordnet ist, wobei der untere Brühkolben (10; 10') mit dem Schwenkarm (25; 25') verbunden ist und in der Beladungsposition die Brühkammer (3; 3') nach oben offen ist.

7. Vorrichtung nach Anspruch 6, **dadurch gekennzeichnet, dass** der untere Brühkolben (10; 10') in der Brühposition aus dem Brühzylinder (2; 2') nach unten hinausschiebbar und über den Schwenkarm (25; 25') aus der zum Brühzylinder (2; 2') koaxialen Stellung verschwenkbar ist, wobei der obere Brühkolben (11; 11') zum Ausstossen des verbrauchten Kaffeepulvers oder eines anderen Getränkereststoffes aus der durch den unteren Brühkolben (10; 10') freigegebenen Brühkammer (3; 3') nach unten bewegbar ist.

8. Vorrichtung nach einem der Ansprüche 3 bis 7, **dadurch gekennzeichnet, dass** zur kombinierten Hub- und Schwenkbewegung des einen Brühkolbens (10; 10') ein gemeinsamer Antrieb (15; 15') vorgesehen ist.

9. Vorrichtung nach einem der Ansprüche 1 bis 8, **dadurch gekennzeichnet, dass** der Station (5) zur Beladung der Brühkammer (3; 3') mindestens ein, vorzugsweise mehrere Mahlwerke für den Kaffee zugeordnet ist/sind.

10. Vorrichtung nach Anspruch 9, **dadurch gekennzeichnet, dass** ein gemeinsamer Antrieb für mehrere Mahlwerke vorgesehen ist, wobei wahlweise jeweils ein Mahlwerk allein antreibbar ist.

11. Vorrichtung nach Anspruch 9, **dadurch gekennzeichnet, dass** beim Vorhandensein von mehreren Brühzylindern (2; 2') das Mahlgut von jedem Mahlwerk wahlweise in die Brühkammer (3; 3') jedes Brühzylinders einfüllbar ist.

12. Vorrichtung nach einem der Ansprüche 2 bis 11, **dadurch gekennzeichnet, dass** ein oder mehrere Auslässe für den gebrühten Kaffee oder andere Getränke vorgesehen sind, wobei Mittel zum Leiten des Kaffees oder anderen Getränkes von einzelnen Brühzylindern (2; 2') zum gewünschten Auslass vorhanden sind.

## Claims

1. An apparatus for producing coffee or other beverages comprising at least one brewing cylinder (2; 2') and brewing pistons (10, 11; 10', 11') that can be moved within the latter and which form a brewing chamber (3; 3'), and comprising a loading station (5) for loading the brewing chamber (3; 3') with ground coffee or other media provided for the preparation of the respective beverage, **characterised in that**
the brewing cylinder (2; 2') can be moved together with the one brewing piston (10; 10') out of a brewing position to the loading station (5) and back, this one brewing piston (10; 10') being removeable in order to expel the used coffee or medium from the brewing cylinder (2; 2').

2. The apparatus according to Claim 1, **characterised in that** two or more brewing cylinders (2; 2') are provided which can be moved independently of one another between the two positions.

3. The apparatus according to Claim 1 or 2, **characterised in that** the brewing chamber (3; 3') of the brewing cylinder (2; 2') can be closed on the face side by a respective brewing piston (10, 11; 10', 11') moveable in the axial direction of the brewing cylinder (2; 2'), at least one of the brewing pistons (10; 10') being moveable out of the brewing cylinder (2; 2') and being pivotable by means of a pivot arm (25; 25') out of the position coaxial to the brewing cylinder (2; 2') or being moveable by some other means away from the brewing cylinder, the movements of the two brewing pistons (10, 11; 10', 11') being implementable independently of one another.

4. The apparatus according to Claim 3, **characterised in that** one of the brewing pistons (10; 10') is located between the loading position and the brewing position in the brewing cylinder (2; 2') during the movement of the brewing cylinder (2; 2').

5. The apparatus according to Claim 4, **characterised in that** the brewing piston (10; 10') remaining in the brewing cylinder (2; 2') during its movement between the loading position and the brewing position is connected to the pivot arm (25; 25'), and the brewing cylinder (2; 2') can be pivoted by the pivot arm (25; 25') out of the one position into the other.

6. The apparatus according to Claim 5, **characterised in that** the brewing cylinder (2; 2') is arranged vertically, the lower brewing piston (10; 10') being connected to the pivot arm (25; 25'), and in the loading position the brewing chamber (3; 3') being open to the top.

7. The apparatus according to Claim 6, **characterised in that** the lower brewing piston (10; 10') in the brewing position can be pushed downwards out of the brewing cylinder (2; 2') and can be pivoted by the pivot arm (25; 25') out of the position coaxial to the brewing cylinder (2; 2'), the upper brewing piston (11; 11') being moveable downwards in order to expel the used coffee powder or some other residual beverage material out of the brewing chamber (3; 3') cleared by the lower brewing piston (10; 10').

8. The apparatus according to any of Claims 3 to 7, **characterised in that** a common drive (15; 15') is provided for the combined stroke and pivot movement of the one brewing piston (10; 10').

9. The apparatus according to any of Claims 1 to 8, **characterised in that** at least one, preferably a number of grinding mechanisms for the coffee is/are assigned to the station (5) for loading the brewing chamber (3; 3').

10. The apparatus according to Claim 9, **characterised in that** a common drive is provided for a number of grinding mechanisms, it being possible to optionally drive just one grinding mechanism respectively.

11. The apparatus according to Claim 9, **characterised in that** with the presence of a number of brewing cylinders (2; 2') the material to be ground of each grinding mechanism can optionally be poured into the brewing chamber (3; 3') of each brewing cylinder.

12. The apparatus according to any of Claims 2 to 11, **characterised in that** one or more outlets are provided for the brewed coffee or other beverages, there being means for conveying the coffee or other beverage from individual brewing cylinders (2; 2') to the desired outlet.

## Revendications

1. Dispositif de préparation de café ou d'autres boissons, comprenant au moins un cylindre (2; 2') d'infusion et un piston (10, 11; 10', 11') d'infusion y coulissant, qui forment une chambre (3; 3') d'infusion, et comprenant un poste (5) de chargement pour charger la chambre (3; 3') d'infusion de café broyé ou d'autres agents prévus pour la préparation de la boisson respective, **caractérisé en ce que**
le cylindre (2; 2') d'infusion peut aller et venir, ensemble avec le piston (10; 10') d'infusion, d'une position d'infusion au poste (5) de chargement transversalement à la direction de coulissement du piston (10; 10') d'infusion dans le cylindre (2; 2') d'infusion, ce piston (10; 10') d'infusion pouvant être retiré pour enlever le café ou l'agent usé du cylindre (2; 2') d'infusion.

2. Dispositif suivant la revendication 1, **caractérisé en ce qu'**il est prévu deux ou plusieurs cylindres (2; 2') d'infusion, qui sont mobiles entre les deux positions indépendamment les uns des autres.

3. Dispositif suivant la revendication 1 ou 2, **caractérisé en ce que** la chambre (3; 3') d'infusion du cylindre (2; 2') d'infusion peut être fermée du côté frontal par respectivement un piston (10, 11; 10', 11') d'infusion pouvant être déplacé dans la direction axiale du cylindre (2; 2') d'infusion, au moins l'un des pistons (10; 10') d'infusion pouvant sortir du cylindre (2; 2') d'infusion et pouvant, par un bras (25; 25') de pivotement, sortir de la position coaxiale au cylindre (2; 2') d'infusion ou être retiré du cylindre d'infusion par un autre moyen, les déplacements des deux pistons (10, 11; 10', 11') d'infusion pouvant s'effectuer indépendamment l'un de l'autre.

4. Dispositif suivant la revendication 3, **caractérisé en ce que** l'un des pistons (10; 10') d'infusion se trouve, pendant le déplacement du cylindre (2; 2') d'infusion, entre la position de chargement et la position d'infusion dans le cylindre (2; 2') d'infusion.

5. Dispositif suivant la revendication 4, **caractérisé en ce que** le piston (10; 10') d'infusion restant dans le cylindre (2; 2') d'infusion, pendant son déplacement entre la position de chargement et la position d'infusion, est relié au bras (25; 25') de pivotement et le cylindre (2; 2') d'infusion peut, par le bras (25; 25') de pivotement, pivoter d'une position à l'autre.

6. Dispositif suivant la revendication 5, **caractérisé en ce que** le cylindre (2; 2') d'injection est disposé verticalement, le piston (10; 10') d'infusion inférieur étant relié au bras (25; 25') de pivotement et, dans la position de chargement, la chambre (3; 3') d'infusion étant ouverte vers le haut.

7. Dispositif suivant la revendication 6, **caractérisé en ce que** le piston (10; 10'), inférieur d'infusion peut, dans la position d'infusion, sortir vers le bas du cylindre (2; 2') d'infusion et pivoter, par le bras (25; 25') de pivotement, hors de la position coaxiale par rapport au cylindre (2; 2') d'infusion, le piston (11; 11') d'infusion supérieur pouvant être déplacé vers le bas pour refouler la poudre de café usée ou une autre substance de boisson hors de la chambre (3; 3') d'infusion dégagée par le piston (10; 10') d'infusion inférieur.

8. Dispositif suivant l'une des revendications 3 à 7, **caractérisé en ce qu'**il est prévu un entraînement (15; 15') commun pour le mouvement combiné de levage et de pivotement du un piston (10; 10') d'infusion.

9. Dispositif suivant l'une des revendications 1 à 8, **caractérisé en ce que**, au poste (5) de chargement de la chambre (3; 3') d'infusion, est/sont associés au moins un, de préférence plusieurs, broyeurs pour le café.

10. Dispositif suivant la revendication 9, **caractérisé en ce qu'**il est prévu un entraînement commun pour plusieurs broyeurs, un broyeur pouvant être entraîné seul.

11. Dispositif suivant la revendication 9, **caractérisé en ce que**, en présence de plusieurs cylindres (2; 2') d'infusion, le produit broyé peut être chargé de chaque broyeur au choix dans la chambre (3; 3') d'infusion de chaque cylindre d'infusion.

12. Dispositif suivant l'une des revendications 2 à 11, **caractérisé en ce qu'**il est prévu une sortie ou plusieurs sorties pour le café infusé ou pour d'autres boissons, des moyens de conduite du café ou d'autres boissons des divers cylindres (2; 2') d'infusion à la sortie souhaitée étant prévus.
